# EUROPÄISCHE PATENTANMELDUNG

(11) **EP 2 099 181 A2**
(43) Veröffentlichungstag der Anmeldung: **09.09.2009**
(21) Anmeldenummer: 09154229.0
(22) Anmeldetag: 03.03.2009
(51) Int. Cl.: H04L 12/58, H04M 1/725

(54) **Vorrichtung und Verfahren zur E-Mail-Konfiguration für ein Mobilfunkendgerät**

(30) Priorität: 03.03.2008 DE 102008012235
(71) Anmelder: Vodafone Holding GmbH, 40027 Düsseldorf (DE)
(72) Erfinder: Mahlstedt, Jan Peter, 45219 Essen (DE)
(74) Vertreter: Weisse, Renate

(57) **Zusammenfassung**

Die Erfindung betrifft eine Konfigurationseinrichtung (80) für ein Mobilfunkendgerät (54) zum Konfigurieren eines Zugangs zu einem E-Mail-Server (66) über ein Mobilfunknetz (50). In dem Mobilfunkendgerät (54) sind Mittel (62) zum Senden und Empfangen von E-Mails (64) vorgesehen. Die Konfigurationseinrichtung (80) ist zum selbstständigen Konfigurieren des Mobilfunkendgeräts (54) für den Zugang zum E-Mail-Server (66) ausgebildet. Weiterhin sind Mittel (52) zum Erfassen von benutzerspezifischen oder mobilfunkendgerätspezifischen Parametern (84) für die Konfiguration vorgesehen. Ferner betrifft die Erfindung ein entsprechendes Mobilfunkendgerät (54) und ein Verfahren zum Konfigurieren eines Zugangs zu einem E-Mail-Server (66) über ein Mobilfunknetz (50) für das Mobilfunkendgerät (54).

## Beschreibung

### Technisches Gebiet

Die Erfindung betrifft eine Konfigurationseinrichtung für ein Mobilfunkendgerät zum Konfigurieren eines Zugangs zu einem E-Mail-Server über ein Mobilfunknetz, wobei
a) in dem Mobilfunkendgerät Mittel zum Senden und Empfangen von E-Mails vorgesehen sind und
b) die Konfigurationseinrichtung zum selbstständigen Konfigurieren des Mobilfunkendgeräts für den Zugang zum E-Mail-Server ausgebildet ist.

Weiterhin betrifft die Erfindung ein Mobilfunkendgerät für ein Mobilfunknetz mit einem Zugang zu einem E-Mail-Server, wobei das Mobilfunkendgerät
a) Mittel zum Senden und Empfangen von E-Mails über den E-Mail-Server und
b) eine Konfigurationseinrichtung zur selbstständigen Konfiguration des Mobilfunkendgeräts für den Zugang zum E-Mail-Server enthält.

Ferner betrifft die Erfindung ein Verfahren zum Konfigurieren eines Zugangs zu einem E-Mail-Server über ein Mobilfunknetz für ein Mobilfunkendgerät, für welches ein Senden und Empfangen von E-Mails vorgesehen ist, wobei
a) ein Konfigurieren des Mobilfunkendgeräts für den Zugang zum E-Mail-Server durch eine Konfigurationseinrichtung erfolgt.

### Stand der Technik

Als E-Mail, die Abkürzung vom englischen Electronic Mail, wird ein Dienst für elektronische Nachrichten aber auch die Nachrichten selber in einem Datennetzwerk, insbesondere dem Internet, bezeichnet. Um E-Mail nutzen zu können, müssen Sender und Empfänger jeweils ein E-Mail-Konto bzw. E-Mail-Postfach eingerichtet haben. Dies ist ein Speicherbereich auf einem E-Mail-Server eines E-Mail-Anbieters im Datennetzwerk, der durch eine eindeutige E-Mail-Adresse gekennzeichnet ist. Ein Inhaber eines E-Mail-Kontos greift üblicherweise auf sein Postfach unter Angabe seines Benutzernamens und seines Passwortes zu. Zum Abholen und Versenden von E-Mails wird auf einem Endgerät, z.B. einem lokalen Computer, ein E-Mail-Programm bzw. E-Mail-Client verwendet. Das E-Mail-Programm muss vor einer Nutzung von einem Benutzer installiert und konfiguriert werden.

Mit der Netzkonvergenz von Mobilfunknetzen und dem Internet stehen in modernen Mobilfunknetzen immer mehr Dienste des Internets zur Verfügung. So wird inzwischen von Mobilfunknetzbetreibern ein E-Mail-Dienst für Mobilfunkteilnehmer angeboten. Dabei werden E-Mails mit Hilfe eines E-Mail-Clients auf einem Mobilfunkendgerät, wie beispielsweise einem Mobilfunktelefon, versendet und empfangen. Ein Zugriff auf ein E-Mail-Konto erfolgt auch hier üblicherweise mit einem Benutzernamen und einem Passwort. Der E-Mail-Client muss vor einer Nutzung konfiguriert werden. Dabei werden sowohl Daten des Benutzers, als auch Merkmale des Mobilfunkendgeräts eingestellt, um einen optimalen Empfang oder ein Senden von E-Mails zu ermöglichen.

Heutzutage werden Mobilfunkendgeräte bereits mit bestimmten vordefinierten Einstellungen ausgeliefert. Ein Benutzer muss aber immer noch den "E-Mailbox-Benutzernamen" (Benutzernamen, MSISDN), das E-Mailbox-Passwort und andere benutzerspezifische Einstellungen vornehmen. Dies ist für den Kunden sehr umständlich.

Als Alternative ist bekannt, dass ein Benutzer auf eine Web-Seite im Internet zugreift und dort eine Konfiguration mit einer Konfigurations-SMS (Short Message Service) für sein Mobilfunkendgerät auslöst. Dazu muss sich der Benutzer aber zunächst für die Web-Seite registrieren und dann durch eine Anzahl verschiedener Web-Seiten navigieren, bevor der Benutzer sein Mobilfunkendgerät spezifizieren und schließlich eine Konfigurations-SMS mit entsprechenden E-Mail-Einstellungen erhält. Dies ist für einen Benutzer ebenfalls umständlich und zeitaufwendig. Zudem muss der Benutzer über einen üblicherweise kostenpflichtigen Internetzugang und ein geeignetes Endgerät, wie einen PC, verfügen.

Ferner ist bei einigen neueren Mobilfunkendgeräten eine Funktion zum Anfordern einer Konfigurations-SMS über einen Menüpunkt oder ein Symbol vorgesehen. Auch hier müssen weitere Einstellungen durch den Benutzer vorgenommen werden. Insbesondere wird eine Konfiguration mit aktuellen Werten oder Optionen nicht gewährleistet. Bei vielen Mobilfunkteilnehmern fehlt aber die Bereitschaft oder die Zeit, sich mit umständlichen Konfigurationen zu beschäftigen. Diese Mobilfunkteilnehmer meiden daher einen für Mobilfunkendgeräte angebotenen E-Mail-Dienst.

### Offenbarung der Erfindung

Aufgabe der Erfindung ist es daher, Nachteile des Standes der Technik zu vermeiden und einem Benutzer eine einfache, zuverlässige und benutzerfreundliche Konfiguration eines Mobilfunkendgeräts zur Nutzung eines E-Mail-Dienstes zu ermöglichen

Erfindungsgemäß wird die Aufgabe dadurch gelöst, dass bei einer Konfigurationseinrichtung der eingangs genannten Art für ein Mobilfunkendgerät zum Konfigurieren eines Zugangs zu einem E-Mail-Server über ein Mobilfunknetz,
c) Mittel zum Erfassen von benutzerspezifischen oder mobilfunkendgerätspezifischen Parametern für die Konfiguration vorgesehen sind.

Weiterhin wird die Aufgabe dadurch gelöst, dass bei einem Mobilfunkendgerät der eingangs genannten Art für ein Mobilfunknetz mit einem Zugang zu einem E-Mail-Server
c) Mittel zum Erfassen von benutzerspezifischen oder mobilfunkendgerätspezifischen Parametern für die Konfiguration in dem Mobilfunkendgerät vorgesehen sind.

Ferner wird die Aufgabe gelöst mit einem Verfahren der eingangs genannten Art Verfahren zum Konfigurieren eines Zugangs zu einem E-Mail-Server über ein Mobilfunknetz für ein Mobilfunkendgerät, für welches ein Senden und Empfangen von E-Mails vorgesehen ist, durch
b) ein Erfassen von benutzerspezifischen oder mobilfunkendgerätspezifischen Parametern für die Konfiguration.

Die Erfindung beruht auf dem Prinzip, notwendige Parameter oder Daten bezüglich des Benutzers oder des Mobilfunkendgeräts für eine selbsttätige Konfiguration eines Mobilfunkendgeräts zur Nutzung eines E-Mail-Dienstes zu ermitteln. Dazu verfügt die Konfigurationseinrichtung bzw. das Mobilfunkendgerät über Mittel zum Erfassen dieser Parameter oder Daten. Das korrespondierende Verfahren sieht ebenfalls ein Erfassen der Parameter oder Daten vor. Die für eine Konfiguration eines Zugangs zu einem E-Mail-Server notwendigen Parameter oder Daten werden automatisch und somit sicher und immer auf dem neuesten, aktuellen Stand durch die Erfassungsmittel erfasst und für eine Konfiguration zur Verfügung gestellt. Ein Benutzer muss diese Werte nicht mehr selber zeitaufwendig und fehlerträchtig eingeben. Dem Benutzer wird eine sehr einfache, zuverlässige und benutzerfreundliche Konfiguration eines E-Mail-Dienstes für sein Mobilfunkendgerät ermöglicht. Ein umständlicher interaktiven Zugriff auf das Internet bzw. einer Webseite mit einem Computer oder ein Ausführen anderer komplexer Prozeduren durch den Benutzer, z.B. mit dem Mobilfunkendgerät, werden sehr effektiv vermieden.

Eine vorteilhafte Ausbildung der erfindungsgemäßen Konfigurationseinrichtung für ein Mobilfunkendgerät zum Konfigurieren eines Zugangs zu einem E-Mail-Server wird dadurch erzielt, dass die Konfigurationseinrichtung in dem Mobilfunkendgerät vorgesehen ist. Einerseits wird hiermit ein sicherer und schneller Zugriff eines Benutzers auf die Konfigurationseinrichtung für eine Konfiguration ermöglicht. Andererseits ist ein direkter und sicherer Zugriff auf benutzerspezifische oder endgerätspezifische Daten bzw. Parameter durch die Konfigurationseinrichtung mit den Erfassungsmitteln durchführbar. Eine Kosten verursachende Verbindung zum Mobilfunknetz ist dazu nicht notwendig.

Bei einer anderen bevorzugten Ausgestaltung der erfindungsgemäßen Konfigurationseinrichtung ist die Konfigurationseinrichtung in einem Server im Mobilfunknetz vorgesehen ist. Mit dieser alternativen Ausgestaltung wird eine einfache und zuverlässige Wartung oder Aktualisierung der Konfigurationseinrichtung in dem Mobilfunknetz, beispielsweise durch einen Mobilfunknetzbetreiber, erreicht. Eine Konfiguration eines Zugangs zu einem E-Mail-Server erfolgt stets mit einer an aktuelle Entwicklungen angepassten Konfigurationseinrichtung. Weiterhin ist ein zuverlässiges und unkompliziertes Erfassen von aktuellen Daten oder Parametern bezüglich des Mobilfunknetzes durch die Konfigurationseinrichtung mit den Erfassungsmitteln für eine Konfiguration durchführbar.

In einer weiteren bevorzugten Ausgestaltung der erfindungsgemäßen Konfigurationseinrichtung sind Mittel zum Erstellen und Senden einer Konfigurations-SMS (Short Message Service) an das Mobilfunkendgerät in dem Mobilfunknetz für die Konfigurationseinrichtung vorgesehen. Die SMS kann beispielsweise aktuelle, z.B. von einem Mobilfunknetzbetreiber festgelegte Parameter und Adressen für eine Konfiguration enthalten. Auf diese Weise wird eine optimale Konfiguration eines Zugangs zu einem E-Mail-Server gewährleistet. Ferner lässt sich eine Anpassung der Konfigurationsdaten an Änderungen oder Neuerungen im Mobilfunknetz für einen Mobilfunknetzbetreiber einfach und schnell durch entsprechende Änderungen in der Konfigurations-SMS vornehmen.

Bei einer Ausbildung der Erfindung umfassen die benutzerspezifischen oder mobilfunkendgerätspezifischen Parameter vorteilhaft einen Mobilfunkendgeräte-Typ, eine MSISDN (Mobile Subscriber Integrated Services Digital Network) und/oder einen verwendeten Mobilfunktarif. Mit Hilfe dieser Parameter lässt sich eine Konfiguration eines E-Mail-Zugangs bestmöglich an ein verwendetes Mobilfunkendgerät und an einen vom Benutzer genutzten Mobilfunktarif anpassen. Zur Verfügung stehende Funktionalitäten des Mobilfunkendgeräts oder Optionen des Mobilfunktarifs werden bei einer Konfiguration benutzerfreundlich berücksichtigt. Weiterhin werden mit der MSISDN eine unkomplizierte Identifizierung des Benutzers und eine Berücksichtigung benutzerspezifischen Daten für eine Konfiguration ermöglicht.

Ferner ist die Konfigurationseinrichtung nach der Erfindung in einer Ausgestaltung vorteilhaft zum Auslösen durch einen Benutzer mittels einer Bedienungseinheit des Mobilfunkendgeräts ausgebildet. Zum Auslösen einer Konfiguration eines E-Mail-Zugangs durch die Konfigurationseinrichtung kann der Benutzer beispielsweise mit Tasten der Bedienungseinheit einen entsprechenden Menüpunkt oder einen Link auf einer WAP-Seite anwählen. Je nach Bedarf ist hierdurch jederzeit eine Konfiguration des Mobilfunkendgeräts für einen Zugang zu einem E-Mail-Server durch den Benutzer möglich. Dabei kann es sich zum Beispiel um eine erstmalige Konfiguration oder eine Aktualisierung einer Konfiguration handeln. Eine Aktualisierung kann von dem Benutzer beispielsweise nach einem Tarifwechsel oder einer Neuerung im Mobilfunknetz erwünscht werden. Mit der Konfigurationseinrichtung nach dieser Ausgestaltung ist eine Konfiguration sehr flexibel und benutzerfreundlich von dem Benutzer zu einem frei wählbaren Zeitpunkt durchführbar.

Eine vorteilhafte Ausbildung des erfindungsgemäßen Verfahrens zum Konfigurieren eines Zugangs zu einem E-Mail-Server über ein Mobilfunknetz für ein Mobilfunkendgerät wird erzielt durch ein Erstellen und Senden einer Konfigurations-SMS an das Mobilfunkendgerät für eine Konfiguration. Wie bei der korrespondierenden Ausbildung der erfindungsgemäßen Konfigurationseinrichtung kann die SMS zum Beispiel aktuelle Parameter und Adressen für eine Konfiguration enthalten. Diese können z.B. von einem Mobilfunknetzbetreiber festgelegt werden. Eine Aktualisierung dieser Parameter an Änderungen oder Neuerungen im Mobilfunknetz ist für einen Mobilfunknetzbetreiber einfach und schnell durch entsprechende Änderungen in SMS möglich. Somit wird zu jeder Zeit eine optimale Konfiguration eines Zugangs zu einem E-Mail-Server für das Mobilfunkendgerät sichergestellt.

Weitere Ausbildungen des erfindungsgemäßen Verfahrens korrespondieren mit oben beschriebenen Ausgestaltungen der erfindungsgemäßen Einrichtung und verfügen jeweils über entsprechende Vorteile.

Ferner ergeben sich aus dem Gegenstand der Unteransprüche, sowie der Zeichnungen mit der dazugehörigen Beschreibung weitere Ausgestaltungen und Vorteile.

Ein Ausführungsbeispiel der Erfindung ist nachstehend unter Bezugnahme auf die zugehörigen Zeichnungen näher erläutert.

### Kurze Beschreibung der Zeichnungen

- Fig. 1: zeigt Ausschnitte von Web-Seiten für eine Konfiguration eines E-Mail- Zugangs eines Mobilfunkendgeräts über das Internet nach dem Stand der Technik.
- Fig. 2: zeigt Darstellungen auf einer Anzeige eine Mobilfunkendgeräts bei einem Konfigurieren eines E-Mail-Zugangs mit dem Mobilfunkendgerät entsprechend dem Stand der Technik.
- Fig. 3: zeigt in einer schematischen Prinzipskizze eine beispielhafte Ausführung der erfindungsgemäßen Konfigurationseinrichtung und eines korrespondierenden Verfahrens zum Konfigurieren eines Zugangs eines Mobilfunkendgeräts zu einem E-Mail-Server.
- Fig. 4: zeigt Anzeigeninhalte, welche auf einer Anzeige des Mobilfunkendgeräts bei einer Konfiguration mit der Konfigurationseinrichtung und dem Verfahren nach Fig. 3 dargestellt werden.
- Fig. 5: zeigt verschiedene mögliche Anzeigen auf der Anzeige des Mobilfunkendgeräts bei einer Konfigurierung nach einer beispielhaften Ausführung der erfindungsgemäßen Konfigurationseinrichtung und des korrespondierenden Verfahrens.

### Bevorzugtes Ausführungsbeispiel

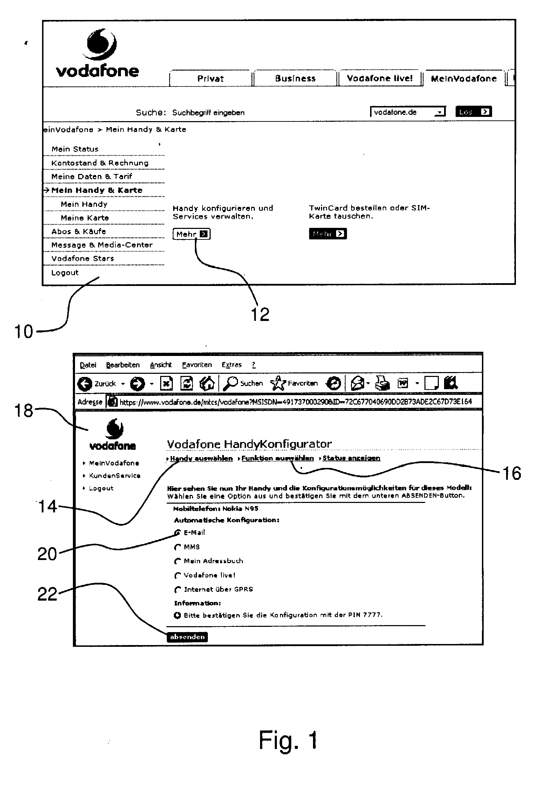

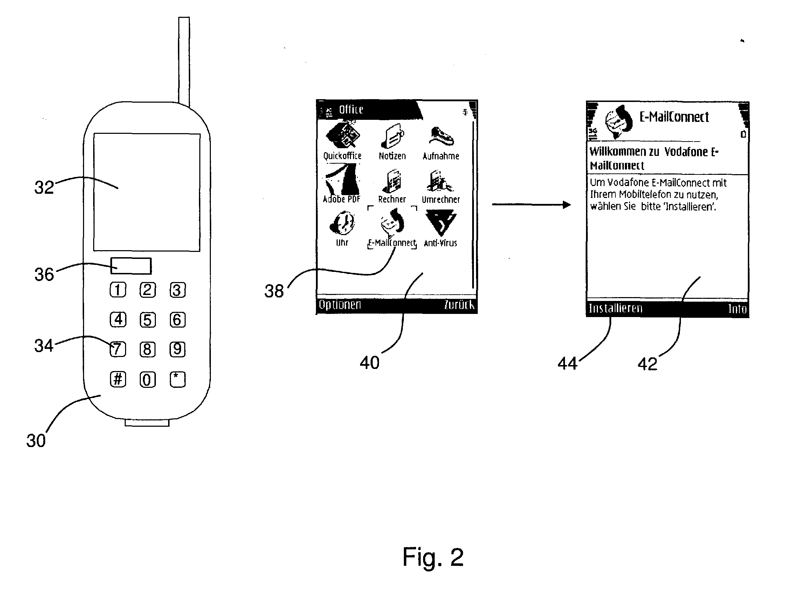

In Fig. 1 und Fig. 2 werden zwei herkömmliche Konfigurationsverfahren zum Konfigurieren eines Zugangs zu einem E-Mail-Server für eine Mobilfunkendgerät aus Sichtweise eines Benutzers dargestellt. Das Mobilfunkendgerät enthält zum Empfangen und Senden von E-Mails üblicherweise ein E-Mail-Programm, einen sogenannten E-Mail-Client. Dieser E-Mail-Client muss vor einer Benutzung entsprechend konfiguriert werden, um einen Zugang auf einen E-Mail-Server mit einem persönlichen Postfach des Benutzers zu ermöglichen.

Bei der ersten Konfiguration nach Fig. 1 und entsprechend dem Stand der Technik verwendet der Benutzer ein geeignetes Endgerät, wie beispielsweise einen PC mit Internetverbindung, um auf ein Service-Portal eines Mobilfunknetzbetreibers zu gelangen. Durch Eingabe eines Benutzernamens und eines Passworts wird für den Benutzer eine persönliche Service-Seite 10 angezeigt. Durch Anklicken eines Links 12 und weiterer Links 14, 16 gelangt der Benutzer schließlich auf die Web-Seite 18. Auf dieser Web-Seite 18 wählt der Benutzer die E-Mail-Konfiguration 20 aus und bestätigt dies durch Klicken auf das Symbol 22. Anschließend ist eine weitere Angabe von Parametern möglich und eine Bestätigung durch Eingabe einer PIN (Personal Identifity Number) notwendig. Nach Eingabe aller notwendigen Angaben wird eine Konfigurations-SMS an das Mobilfunkendgerät geschickt, mit der der Benutzer eine Konfiguration des E-Mail-Zugangs vornehmen kann. Diese Vorgehensweise ist für einen Benutzer sehr umständlich und zeitaufwendig. Der Benutzer muss durch eine Vielzahl von Web-Seiten navigieren und erforderliche Daten eingeben. Ferner muss der Benutzer über ein geeignetes Endgerät mit einen üblicherweise kostenpflichtigen Internetzugang verfügen.

Das zweite Konfigurationsverfahren nach dem Stand der Technik wird in Fig. 2 ebenfalls aus Sichtweise eines Benutzers gezeigt. Ein Mobilfunkendgerät 30 mit einer Anzeige 32 und einer Bedienungseinheit 34 verfügt über ein Konfigurationsmodul 36. Das Konfigurationsmodul wird schon vor einer Ausgabe des Mobilfunkendgeräts 30 an den Benutzer für eine Konfiguration eines E-Mail-Zugangs installiert. Mit Hilfe der Bedienungseinheit 34 navigiert der Benutzer beispielsweise durch Menüs mit Funktionen oder Fenster mit Symbolen, welche auf der Anzeige 32 dargestellt werden. Durch Anwahl eines entsprechenden Symbols 38 in einem Fenster 40 wird das Konfigurationsmodul 36 gestartet. Es erschein ein weiteres Fenster 42 mit einer Aufforderung, einen Softkey "Installier" 44 für eine Konfiguration eines Zugangs zu einem E-Mail-Dienst zu betätigen. Nach Betätigung des Softkeys 44 führt das Konfigurationsmodul eine entsprechende Konfiguration aus. Dabei muss der Benutzer weitere Daten eingeben und es werden bereits bei der Installation des Konfigurationsmoduls festgelegt Parameter verwendet. Auch dieses bekannte Verfahren ist daher wenig benutzerfreundlich. Es besteht zudem die Möglichkeit, dass veraltete Daten, beispielsweise ein nicht mehr aktueller Tarif, für eine Konfiguration verwendet werden. Dieses würde zu ungerechtfertigten Kosten für einen Benutzer führen.

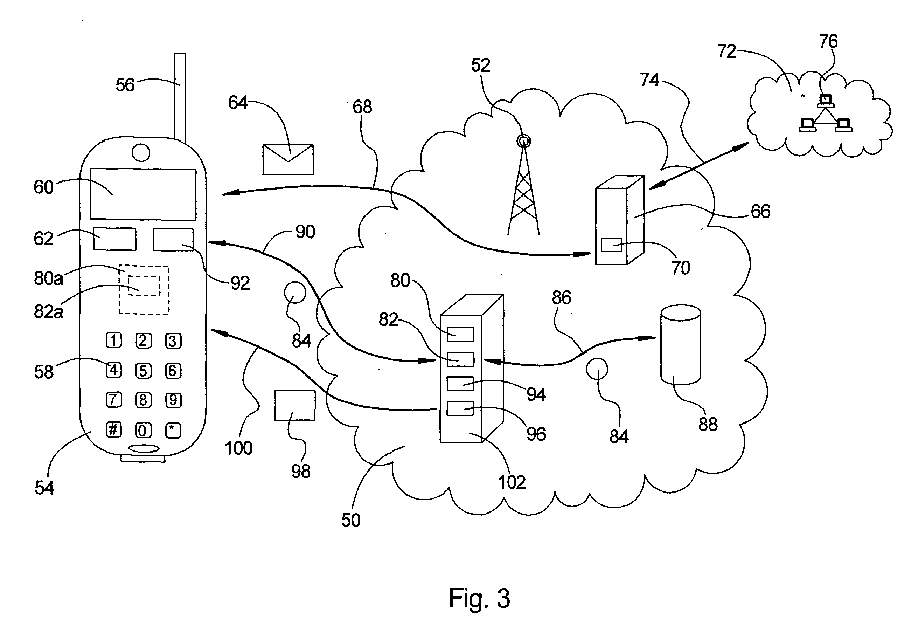

In Fig. 3 wird ein Ausführungsbeispiel einer Konfigurationseinrichtung in einer schematischen Prinzipskizze dargestellt. Dazu wird in Fig. 3 mit 50 ein Mobilfunknetz bezeichnet. Das Mobilfunknetz 50 ist ein öffentliches, zellulares Mobilfunknetz der 2,5., 3. oder 4. Generation und ist beispielsweise nach dem GSM-, GPRS-, EDGE-, UMTS-, HSDPA-, CDMA2000-, FOMA-, TD-SCDMA-, LTE/SEA oder WiMAX-Standard ausgebildet. Dem Fachmann sind solche Mobilfunknetze mit den entsprechenden Bestandteilen geläufig. Der Einfachheit halber wird das Mobilfunknetz 10 daher nur durch eine Wolke mit einem darin enthaltenen Funkmast 52 stilisiert dargestellt.

Mit einem Mobilfunkendgerät 54 wird für einen Benutzer eine Kommunikation über das Mobilfunknetz 50 oder eine mobile Inanspruchnahme von Diensten ermöglicht. Als Mobilfunkendgerät 54 kann beispielsweise ein Mobiltelefon, Handy, Autotelefon, Smartphone, ein stationärer Rechner (z.B. PC) oder mobiler Rechner (z.B. Notebook, PDA) oder ein anderes Gerät mit einer eingebauten oder über eine Schnittstelle angeschlossenen Mobilfunkschnittstelle 56 (z.B. eine PMCCIA-Karte) verwendet werden.

Das Mobilfunkendgerät 54 enthält neben anderen, für eine Kommunikation über das Mobilfunknetz 50 notwendigen und einem Fachmann bekannten Vorrichtungen und Funktionalitäten insbesondere eine Bedienungseinheit 58 und eine Anzeige 60. Weiterhin verfügt das Mobilfunkendgerät 54 über ein E-Mail-Client 62 als Mittel zum Senden und Empfangen von E-Mails. Mit dem E-Mail-Client 62 wird u.a. ein Erstellen und Versenden oder ein Empfangen und Lesen einer E-Mail 64 durch das Mobilfunkendgerät 54 ermöglicht. Dazu verfügt der E-Mail-Client 62 über eine grafische Benutzeroberfläche, welche die Anzeige 60 nutzt. Eine empfangene Mail wird beispielsweise mit Hilfe der grafischen Benutzeroberfläche auf der Anzeige 60 zum Lesen dargestellt. Mit Hilfe der Bedienungseinheit 58 und der Anzeige 60 ist auch ein Erstellen einer E-Mail 64 möglich. Allgemein wird dem Benutzer mit dem E-Mail-Client 62 die Nutzung eines E-Mail-Dienstes durch das Mobilfunkendgerät 54 ermöglicht.

Über das Mobilfunknetz 50 wird mit einem E-Mail-Server 66 ein E-Mail-Dienst für den Benutzer des Mobilfunkendgeräts 54 angeboten. Der E-Mail-Server 66 ist entweder im Mobilfunknetz 50 oder in einem externen Datennetzwerk vorgesehen, und ist zum Senden oder Empfangen einer E-Mail 64 über eine Verbindung 68 für das Mobilfunkendgerät 54 erreichbar. In dem E-Mail-Server 66 ist für den Benutzer ein E-Mail-Postfach 70 eingerichtet. Um E-Mails 64 in dem E-Mail-Postfach 70 zu empfangen oder über dieses zu senden, ist der E-Mail-Server 66 mit dem Internet 72 verbunden (Pfeil 74). Das Internet 72 mit seinen Bestandteilen und Funktionalitäten ist dem Fachmann bekannt. Es wird daher zur Vereinfachung als Wolke mit darin enthaltenen Computern 76 stilisiert dargestellt.

Ferner verfügt das Mobilfunknetz 50 über eine Konfigurationseinrichtung 80. Die Konfigurationseinrichtung 80 führt eine Konfiguration des Mobilfunkendgeräts 54 bzw. des E-Mail-Clients 62 im Mobilfunkendgerät 54 für einen Zugang zum E-Mail-Server 66 aus. Dazu sind für die Konfigurationseinrichtung 80 Erfassungsmittel 82 zum Erfassen von benutzerspezifischen oder mobilfunkendgerätspezifischen Daten oder Parameter, Kreis 84, vorgesehen. Als Parameter 84 werden beispielsweise eine MSISDN, eine IMSI (International Mobile Subscriber Identity), ein Benutzername, ein verwendeter Mobilfunktarif mit darin vorgesehenen Diensten oder Optionen und andere persönliche Daten des Benutzers, sowie Hersteller und Modell des Mobilfunkendgeräts 54, eine Seriennummer und weitere spezifische Merkmale des Mobilfunkendgeräts 54 erfasst. Hierfür können die Erfassungsmittel 82 z.B. über ein Verbindungen 86 auf ein Heimatregister (HLR) 88 oder eine andere Datenbank im Mobilfunknetz 50 oder über eine Verbindung 90 auf das Mobilfunkendgerät 54 oder ein darin enthaltenes Identifikationsmodul 92, z.B. eine SIM-Karte (Subscriber Identity Modul) oder USIM-Karte (UMTS-SIM) zugreifen und entsprechende Daten und Parameter anfordern.

Weiterhin ist für die Konfigurationseinrichtung 80 eine Tarifeinheit 94 zum Ermittel einer optimalen Konfiguration in Abhängigkeit eines verwendeten Mobilfunktarifs vorgesehen. Mit Mitteln 96 zum Erstellen und Senden einer SMS werden von der Konfigurationseinrichtung unter Berücksichtigung der erfassten Parameter 84 festgelegte Konfigurationseinstellungen als Konfigurations-SMS 98 an das Mobilfunkendgerät 54 gesendet, Pfeil 100.

Die Konfigurationseinrichtung 80 ist in diesem Ausführungsbeispiel zusammen mit den Erfassungsmitteln 82, der Tarifeinheit 94 und den Mitteln 96 zum Erstellen und Senden einer Konfigurations-SMS 98 zentral in einem Server 102 des Mobilfunknetzes 50 vorgesehen. Der Server kann eine Konfiguration eines E-Mail-Zugangs z.B. durch ein WAP-Portal (Wireless Application Protocol) unterstützen. In alternativen Ausführungen können einige oder alle dieser Komponenten 80, 82, 93, 94 auch dezentral im Mobilfunknetz 50 oder in anderen Bestandteilen des Mobilfunknetzes 50 vorgesehen sein. In einer weiteren alternativen Ausführung sind ist eine Konfigurationseinrichtung 80a und Erfassungsmittel 82a in dem Mobilfunkendgerät 54 enthalten.

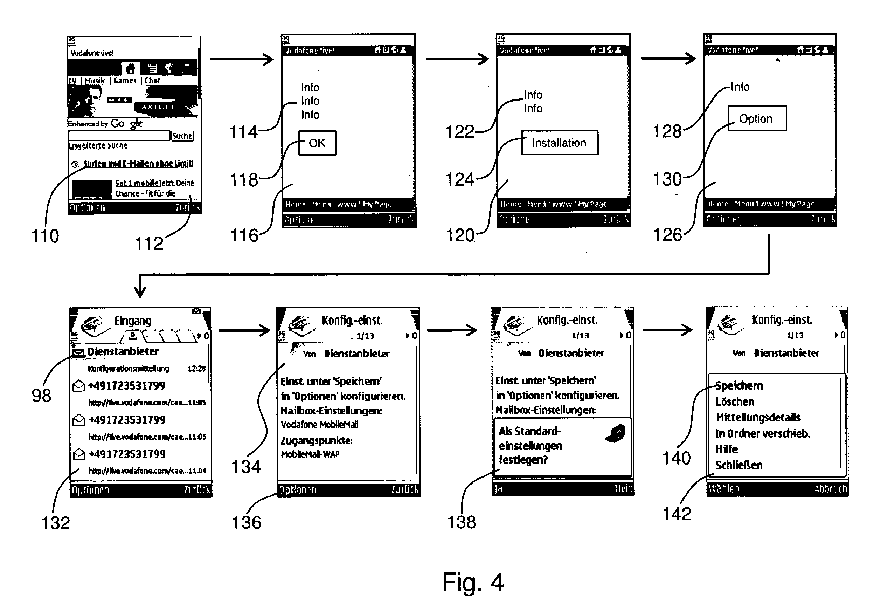

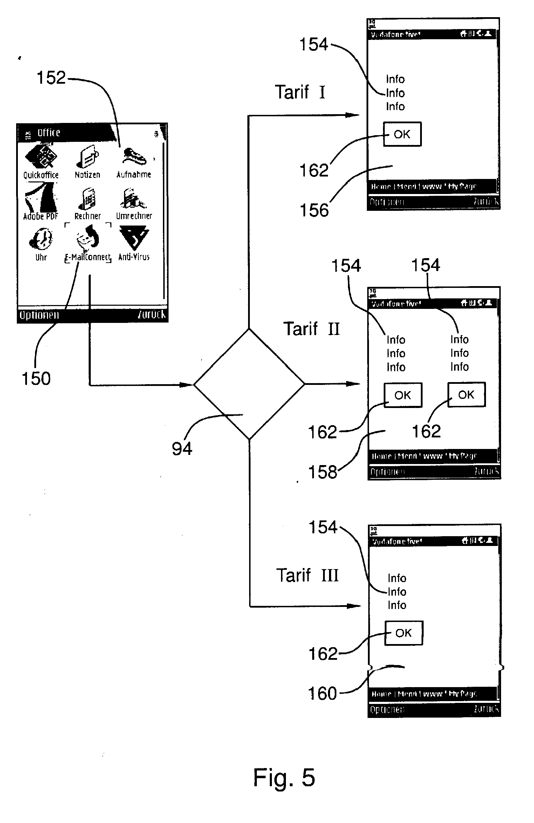

Im Folgenden wird die Funktionsweise der Kommunikationseinrichtung 80, der Erfassungsmitteln 82, der Tarifeinheit 94 und der Mitteln 96 zum Erstellen und Senden einer Konfigurations-SMS 98 zusammen mit einem entsprechenden Verfahren zur Konfiguration eines E-Mail-Zugangs für ein Mobilfunkendgerät 54 beschrieben. Dabei wird sowohl auf Fig. 3 als auch auf Fig. 4 und Fig. 5 Bezug genommen. Gleiche Bestandteile werden in Fig. 3, Fig. 4 und Fig. 5 mit entsprechenden Bezugszeichen bezeichnet.

Zum Konfigurieren des E-Mail-Clients 62 bzw. des Mobilfunkendgeräts 54 für einen Zugang zum E-Mail-Server 66 kann der Benutzer nun einen Link 110 (siehe Fig. 4) anwählen, welcher beispielsweise auf einer Seite 112 eines WAP-Portals, z.B. "Vodafone Live!", des Server 102 oder des Mobilfunknetzes 50 dargestellt wird. Der Link 110 ist in diesem Beispiel ein sogenannter Teaser, d.h. ein Werbe-Link, welcher hier zum Anpreisen eines E-Mail-Dienstes für Mobilfunkendgeräte dient.

Durch Anwählen des Links 110 wird eine Konfiguration des Mobilfunkendgeräts 54 bzw. des E-Mail-Clients 62 gestartet. Mit den Mitteln zum Erfassen von benutzerspezifischen und mobilfunkendgerätspezifischen Parametern 84 werden alle notwenigen Daten erfasst und für die Konfigurationseinrichtung 80 zur Verfügung gestellt. Zu den Daten gehören z.B. der Gerätetyp des Mobilfunkendgeräts 54 und die MSISDN, sowie ein momentan verwendeter Tarif. Die Tarifeinheit 94 ermittelt neben möglichen Optionen und Bedingungen des verwendeten Tarifs auch mögliche Alternativtarife. Auf diese Weise verfügt die Konfigurationseinrichtung 80 über Optionen, Kosten und Bedingungen des benutzten Tarifs und weiterer Alternativtarif und kann diese dem Benutzer als Information 114 auf einer WAP-Seite 116 mitteilen oder eine Auswahl anbieten. Wenn der Benutzer beispielsweise bereits eine Internet-Flatrate gebucht hat und diese benutzt, wird ihm mitgeteilt, dass ein E-Mail-Dienst nun auch in seiner Flatrate enthalten ist und dass ihm die Konfigurationseinstellungen mit einem Klick auf ein Steuerelement "OK" 118 zugesendet werden.

Nach einer Anwahl des Steuerelements 118 wird eine weitere WAP-Seite 120 für den Benutzer dargestellt, auf der weitere Informationen 122 aufgezeigt werden und der Benutzer zu einer Bestätigung der Konfiguration durch Anwahl eines Steuerelements 124 aufgefordert wird. Anschließend kann eine WAP-Seite 126 mit Informationen 128 zu möglichen Optionen und Feineinstellungen dargestellt werden. Beispielsweise kann ein E-Mail-Sammeldienst zum Sammeln von E-Mails aus anderen E-Mail-Konten des Benutzers vorgeschlagen werden. Die Optionen sind jeweils durch Anwahl eines Steuerelements 130 auswählbar.

Nach einer Bestätigung durch den Benutzer erstellt die Konfigurationseinrichtung 80 alle notwendigen Konfigurationseinstellungen unter Berücksichtigung des Gerätetyps des Mobilfunkendgeräts 54, persönlicher Daten des Benutzers, eines Mobilfunktarifs, einer Auswahl durch den Benutzer und weitere von den Erfassungsmitteln 82 und der Tarifeinheit 94 ermittelter Daten. Anschließend werden die optimalen Konfigurationseinstellungen mit den Mitteln 96 zum Erstellen und Senden einer SMS als Konfigurations-SMS 98 an das Mobilfunkendgerät 54 gesendet, Pfeil 100.

Ein Empfang der Konfigurations-SMS 98 wird für den Benutzer in einem SMS-Eingangs-Fenster 132 angezeigt. Nach Öffnen der Konfigurations-SMS 98 durch den Benutzer werden können auf der Anzeige 60 des Mobilfunkendgeräts 54 weitere Informationen zur Konfiguration als Inhalt 134 dargestellt werden. Beispielsweise wird der Benutzer zum Speichern der Konfigurations-SMS 96 unter einem Menüpunkt oder Softkey "Optionen" 136 aufgefordert und Informationen zu Zugangspunkten und Einstellungen aufgezeigt. Zusätzlich ist eine Darstellung von weiteren Auswahlmöglichkeiten, wie eine Festlegung als Standard-E-Mail-Konfiguration, siehe Fenster 138, möglich. Durch Anwählen eines Steuerelements "Speichern" 140 in einem Fenster 142 wird schließlich eine Konfiguration des E-Mail-Zugangs zum E-Mail-Server 66 für das Mobilfunkendgerät 54 bzw. den E-Mail-Client 62 durchgeführt.

In Fig. 5 wird eine weitere Möglichkeit der Konfiguration des E-Mail-Zugangs durch die Konfigurationseinrichtung 80 dargestellt. Dabei wird ein vorhandenes Symbol 150 in einem Fenster 152 verwendet. Durch Anwahl des Symbols 150 in dem Mobilfunkendgerät 54 wird beispielsweise über einen Link die Konfigurationseinrichtung 80 aufgerufen. Die Erfassungsmittel 82 sammeln, wie oben beschrieben, notwendige Parameter 84, insbesondere den Gerätetyp des Mobilfunkendgeräts 54 und eine vom Benutzer verwendeten Tarif. Je nach benutztem Tarif I, II oder III oder Gerätetyp ermittelt die Tarifeinheit 94 verschiedene Informationen 154, z.B. über jeweils optimale Konfigurationen, Optionen und Kosten eines E-Mail-Zugangs. Diese Informationen 154 werden beispielsweise mit Hilfe der Konfigurationseinrichtung 80 je nach Tarif auf einer WAP-Seite 156, 158 oder 160 aufgezeigt. Dabei kann auch eine Auswahl zwischen mehreren Möglichkeiten für den Benutzer dargestellt werden, siehe WAP-Seite 158. Durch Anwahl eines Steuerelements 162 wird eine entsprechende Konfiguration von dem Benutzer ausgewählt. Anschließend wird wie nach Fig. 4 eine Konfigurations-SMS 98 an das Mobilfunkendgerät 54 geschickt und mit dieser eine Konfiguration des E-Mail-Zugangs durchgeführt.

Der Benutzer führt mit der oben beschriebenen Konfigurationseinrichtung 80 eine einfache, zuverlässige und stets aktuelle E-Mail-Konfiguration seines Mobilfunkendgeräts 54 durch, ohne dass ein Zugriff auf das WWW oder andere komplexe Prozeduren notwendig sind. Dabei wird eine optimale Konfiguration bezüglich des Mobilfunkendgeräts 54 und eines benutzten Mobilfunktarifs gewährleistet.

## Patentansprüche

1. Konfigurationseinrichtung (80) für ein Mobilfunkendgerät (54) zum Konfigurieren eines Zugangs zu einem E-Mail-Server (66) über ein Mobilfunknetz (50), wobei
a) in dem Mobilfunkendgerät (54) Mittel (62) zum Senden und Empfangen von E-Mails (64) vorgesehen sind und
b) die Konfigurationseinrichtung (80) zum selbstständigen Konfigurieren des Mobilfunkendgeräts (54) für den Zugang zum E-Mail-Server (66) ausgebildet ist,
**dadurch gekennzeichnet, dass**
c) Mittel (52) zum Erfassen von benutzerspezifischen oder mobilfunkendgerätspezifischen Parametern (84) für die Konfiguration vorgesehen sind.

2. Konfigurationseinrichtung (80) für ein Mobilfunkendgerät (54) zum Konfigurieren eines Zugangs zu einem E-Mail-Server (66) nach Anspruch 1, **dadurch gekennzeichnet, dass** die Konfigurationseinrichtung (80) in dem Mobilfunkendgerät (54) vorgesehen ist.

3. Konfigurationseinrichtung (80) für ein Mobilfunkendgerät (54) zum Konfigurieren eines Zugangs zu einem E-Mail-Server (66) nach Anspruch 1, **dadurch gekennzeichnet, dass** die Konfigurationseinrichtung (80) in einem Server (102) im Mobilfunknetz (50) vorgesehen ist.

4. Konfigurationseinrichtung (80) für ein Mobilfunkendgerät (54) zum Konfigurieren eines Zugangs zu einem E-Mail-Server (66) nach einem der Ansprüche 1 bis 3, **dadurch gekennzeichnet, dass** Mittel (96) zum Erstellen und Senden einer Konfigurations-SMS (98) an das Mobilfunkendgerät (54) in dem Mobilfunknetz (50) für die Konfigurationseinrichtung (80) vorgesehen sind.

5. Konfigurationseinrichtung (80) für ein Mobilfunkendgerät (54) zum Konfigurieren eines Zugangs zu einem E-Mail-Server (66) nach einem der Ansprüche 1 bis 4, **dadurch gekennzeichnet, dass** die benutzerspezifischen oder mobilfunkendgerätspezifischen Parameter (84) einen Mobilfunkendgeräte-Typ, eine MSISDN und/oder einen verwendeten Mobilfunktarif umfassen.

6. Konfigurationseinrichtung (80) für ein Mobilfunkendgerät (54) zum Konfigurieren eines Zugangs zu einem E-Mail-Server (66) nach einem der Ansprüche 1 bis 5, **dadurch gekennzeichnet, dass** die Konfigurationseinrichtung (80) zum Auslösen durch einen Benutzer mittels einer Bedienungseinheit (58) des Mobilfunkendgeräts (54) ausgebildet ist.

7. Mobilfunkendgerät (54) für ein Mobilfunknetz (50) mit einem Zugang zu einem E-Mail-Server (66), wobei das Mobilfunkendgerät (54)
a) Mittel (62) zum Senden und Empfangen von E-Mails (64) über den E-Mail-Server (66) und
b) eine Konfigurationseinrichtung (80a) zur selbstständigen Konfiguration des Mobilfunkendgeräts (54) für den Zugang zum E-Mail-Server (66) enthält,
**dadurch gekennzeichnet, dass**
c) Mittel (82a) zum Erfassen von benutzerspezifischen oder mobilfunkendgerätspezifischen Parametern (84) für die Konfiguration in dem Mobilfunkendgerät (54) vorgesehen sind.

8. Verfahren zum Konfigurieren eines Zugangs zu einem E-Mail-Server (66) über ein Mobilfunknetz (50) für ein Mobilfunkendgerät (54), für welches ein Senden und Empfangen von E-Mails (64) vorgesehen ist, wobei
a) ein Konfigurieren des Mobilfunkendgeräts (54) für den Zugang zum E-Mail-Server (66) durch eine Konfigurationseinrichtung (80) erfolgt,
**gekennzeichnet durch**
b) ein Erfassen (86, 90) von benutzerspezifischen oder mobilfunkendgerätspezifischen Parametern (84) für die Konfiguration.

9. Verfahren zum Konfigurieren eines Zugangs zu einem E-Mail-Server (66) über ein Mobilfunknetz (50) für ein Mobilfunkendgerät (54) nach Anspruch 8, **gekennzeichnet durch** ein Erstellen und Senden (100) einer Konfigurations-SMS (98) an das Mobilfunkendgerät (54) für eine Konfiguration.

10. Verfahren zum Konfigurieren eines Zugangs zu einem E-Mail-Server (66) über ein Mobilfunknetz (50) für ein Mobilfunkendgerät (54) nach Anspruch 8 oder 9, **gekennzeichnet durch** Erfassen (86, 90) eines Mobilfunkendgeräte-Typs, einer MSISDN und/oder eines verwendeten Mobilfunktarif als benutzerspezifische oder mobilfunkendgerätspezifischen Parameter (84).

11. Verfahren zum Konfigurieren eines Zugangs zu einem E-Mail-Server (66) über ein Mobilfunknetz (50) für ein Mobilfunkendgerät (54) nach einem der Ansprüche 8 bis 10, **gekennzeichnet durch** ein Auslösen der Konfiguration **durch** einen Benutzer mittels einer Bedienungseinheit (58) des Mobilfunkendgeräts (54).
